# EUROPEAN PATENT APPLICATION

(11) **EP 4 803 255 A1**
(43) Date of publication of application: **09.09.2026**
(21) Application number: 26162726.9
(22) Date of filing: 05.03.2026
(51) Int. Cl.: B23Q 1/03, B23Q 16/00, B27M 1/08

(54) **WORKPIECE-HOLDING APPARATUS FOR A MACHINE TOOL**

(30) Priority: 07.03.2025 IT 202500004824
(71) Applicant: PAOLINO BACCI S.R.L., 56021 Cascina (PI) (IT)
(72) Inventor: SPINELLI, Simone, 56021 Cascina (PI) (IT); MINUCCI, Andrea, 56021 Cascina (PI) (IT)
(74) Representative: Mannucci, Michele

(57) **Abstract**

A workpiece-holding apparatus for a machine tool, comprising a plurality of workpiece-holding devices, which in turn comprise:
- a longitudinal beam;
- at least one carriage movable along the longitudinal development of the beam;
- a workpiece locking member provided on the carriage,
wherein at least one of said workpiece-holding devices further comprises:
- at least one lateral reference surface for the workpiece to be machined, against which the workpiece is configured to abut to establish a first spatial reference of the workpiece in the machine tool to which the workpiece-holding apparatus is associated;
- a front reference surface, orthogonal to the lateral reference surface, for the workpiece to be machined, against which the workpiece is configured to abut to establish a second spatial reference of the workpiece in the machine tool to which the workpiece-holding apparatus is associated;
- a device for varying the longitudinal position along the longitudinal development of the beam for said at least one lateral reference surface, to establish said first spatial reference for a workpiece being machined on the machine to which the workpiece-holding apparatus is associated.

## Description

### Technical field

The present invention relates to the field of machine tools. Embodiments described herein relate in particular to improvements to workpiece-holding apparatus for machine tools for machining elements made of wood, plastic, light alloys, or other materials, such as for example furniture components or the like, as well as to said machine tools.

### Prior art

For the machining of flat workpieces made of various materials, such as furniture doors, panels, uprights and crosspieces, or other items, it is known to use machine tools, i.e. numerically controlled work centres, which are provided with work-piece-holding devices associated with workpiece-holding working heads, and wherein the workpiece-holding devices are provided with workpiece-holding devices associated with a plurality of locking devices for the workpieces to be machined.

In some cases, the locking devices may be pneumatic, i.e. suction cup, mechanical or other types, and may be positioned in appropriate positions depending on the size and shape of the workpieces to be worked. Some workpieces require special equipment to be fixed.

The machining of the workpieces takes place via at least one working head, or operating head, which may be provided with at least one rotating tool. The working head and the workpiece-holding apparatus are movable relative to each other along a plurality of numerically controlled axes to allow the execution of a multiplicity of work cycles.

Machine tools of this type are normally provided with three mutually orthogonal numerically controlled translation axes. Typically, two numerically controlled translation axes define a plane parallel to the workpiece locking plane, and a third axis develops orthogonally to the locking plane. In some cases, one or more numerically controlled rotary axes are also provided, to perform machining operations at various angles with respect to the workpiece to be machined.

Machine tools for machining panels or other flat articles typically include workpiece-holding apparatus, each comprising a workpiece-holding apparatus comprising at least one pair of workpiece-holding devices, each of which comprises a pair of beams or bars which are parallel to each other and substantially coplanar. In some embodiments, multiple beams or bars may be provided, parallel to each other, at an adjustable distance. On each beam there are arranged locking devices for the workpieces to be machined in appropriate positions which may be selected according to the type of workpiece.

EP2361738, EP2371488, DE202015004517U, EP3403793, EP3403794 and EP3403795 describe examples of machine tools or work centres of this type.

In all these machines, there is a need to create a spatial reference for the workpieces. To do this, there are rods or flanks associated with the workpiece-holding apparatus, which are moved vertically from a position below the workpiece support plane in the machine, to a raised position, and against which the workpieces are placed in contact to identify the position of the workpiece with respect to an X-axis and the position of the workpiece with respect to a Y-axis, on the workpiece support plane.

There is a need to refine machines of the above type in order to improve the functionality of the workpiece-holding apparatus. In particular, it would be advantageous to improve the ease and flexibility of creating part positioning feedback in order to communicate the exact position of the workpieces to be machined to the machine.

### Summary

To improve the machine tools of the prior art, a workpiece-holding apparatus for machine tools is provided, comprising a plurality of workpiece-holding devices in turn comprising
- a longitudinal beam;
- at least one carriage movable along the longitudinal development of the beam;
- a workpiece locking member provided on the carriage;
wherein at least one workpiece-holding devices further comprises
- at least one lateral reference surface for the workpiece to be machined, against which the workpiece is configured to abut to establish a first spatial reference of the workpiece in the machine tool to which the workpiece-holding apparatus is associated, such as a reference relative to a position along an X-axis in a Cartesian X-Y reference system;
- a front reference surface, orthogonal to the lateral reference surface, for the workpiece to be machined, against which the workpiece is configured to abut to establish a second spatial reference of the workpiece in the machine tool to which the work-piece-holding apparatus is associated, such as a reference relative to a position along a Y-axis in a Cartesian X-Y reference system;
- a device for varying the longitudinal position along the longitudinal development of the beam for said at least one lateral reference surface, to establish, if necessary, a first spatial reference for a workpiece being machined on the machine to which the workpiece-holding apparatus is associated.

The machine tool may be particularly suitable for working flat articles, such as panels, uprights, or the like, made of wood or other materials, such as light alloys, aluminium, plastic, or the like.

In the preferred embodiments, all the workpiece-holding devices are arranged so as to have their respective longitudinal beams laid parallel to each other.

The workpiece-holding apparatus may include a single workpiece-holding device of said plurality which comprises said at least one lateral reference surface, said front reference surface and said device for varying the longitudinal position, while the other workpiece-holding devices may be not provided with them; more preferably at least two, and even more preferably all, of the workpiece-holding devices of the plurality which make up the workpiece-holding apparatus comprise said at least one lateral reference surface, said front reference surface and said device or varying the longitudinal position.

Using a lateral reference surface for the workpiece which may be moved along the beam allows for great flexibility in creating references along the beam, while leaving the beam structure free for the arrangement of other equipment and components.

In preferred embodiments, the at least one workpiece-holding device comprises a reference body provided on the beam, and on this reference body the at least one lateral reference surface is defined; the reference body is configured to be moved along the longitudinal development of the beam by means of the device for varying the longitudinal position.

Preferably, the front reference surface is also defined on the reference body.

In this way, both spatial references for the workpiece on the beam are created on the reference body, ensuring excellent flexibility in using the references. With the reference body it is therefore possible to create references for the workpiece on the beam itself, or references for workpieces present on adjacent beams.

Preferably, the reference body has two lateral reference surfaces opposite each other with respect to the front reference surface; the reference body may have two lateral flanks defining respective lateral reference surfaces, arranged on opposite sides with respect to a front face of the reference body which defines the front reference surface.

Conveniently, in the at least one workpiece-holding device, the reference body has two reference positions:
- a first longitudinal reference position which is retracted towards one end of the respective beam on which the reference body moves, and in which, in this first position, the reference is established by the workpiece locked on a carriage of the same beam abutting against the front reference surface of the reference body,
- a second longitudinal reference position, more advanced along the beam compared to the first position (with reference to the first end of the beam), in which the reference is established for a workpiece locked on an adjacent beam of another workpiece-holding device, and in which such workpiece abuts against the lateral reference surface of the reference body.

In practice, with the front and lateral reference surfaces defined on a single reference body, the latter defines, for the same workpiece, only one lateral reference or one front reference. Therefore, in this case, for a specific workpiece locked on the workpiece-holding apparatus, two reference bodies are provided, arranged on different workpiece-holding devices, to create two distinct lateral and front references.

Preferably, with multiple workpiece-holding devices having movable reference bodies along parallel beams, the reference bodies all have the same first reference position for the bodies on the beams, so that the front reference surfaces of the reference bodies on the beams are all aligned when a workpiece abuts one or more of them. Such first positions are preferably fixed in the apparatus.

In preferred embodiments, the device for varying the longitudinal position comprises at least one sliding guide for the reference body, parallel to the longitudinal development direction of the beam; preferably, the guide is provided on a support base of the reference body; preferably, the device for varying the longitudinal position comprises at least one movement actuator, preferably of an automated type, interposed between the base and the reference body, configured to move the body on the guide.

In preferred embodiments, a plurality of said carriages is present on each beam.

In the preferred embodiments, the at least one workpiece-holding device comprises a lifting and lowering device for the reference body, from a first level corresponding to the reference positions for the workpiece to be machined to a second level where the reference body is entirely below the support surface of the workpiece on said carriage, and more preferably at least partially below the workpiece locking member on the carriage; the lifting and lowering device may comprise at least one displacement actuator, preferably of an automated type.

In this regard, preferably, the reference body comprises a front face defining the front reference surface for the workpiece, provided with a concave portion with a concavity open towards said workpiece-holding carriage, suitable for at least partially accommodating the workpiece locking device when the reference body is moved to the second level; preferably, two vertex areas are provided between which the concave portion is defined, which define the front reference surface for the workpiece (for which reason, in general, the front reference surface may also be made in multiple surface portions separate from each other, but coplanar).

For example, the reference body may comprise two teeth elongated in the longitudinal direction of the beam, and the vertex areas of the two teeth define the front reference surface for the workpiece; the external lateral flanks of the teeth instead define two respective opposing lateral reference surfaces for the workpiece; suitably, the teeth may be spaced from each other to a greater extent than the transverse width of the workpiece locking device to accommodate at least part of the workpiece locking device between them.

The beam of the at least one workpiece-holding device comprises, in the longitudinal direction, two opposite ends, defined for example as head and tail; the reference body is positioned approximately at the head of the beam.

As already mentioned, the workpiece-holding devices are arranged so as to have their respective longitudinal beams arranged parallel to each other, and the apparatus includes a system for adjusting the distance between the beams of said work-piece-holding devices. Such distance adjustment system preferably comprises adjustment guides, orthogonal to the longitudinal development of the beams, on which said longitudinal beams are mounted.

In preferred embodiments, there is at least one fixed longitudinal flank, parallel to said beams, which acts as an additional lateral reference surface for the workpieces. Preferably, said at least fixed longitudinal flank is provided laterally to the plurality of beams that make up the workpiece-holding apparatus.

In preferred embodiments, the workpiece locking member, provided on the carriage, includes a suction cup for locking the workpieces. Preferably, the suction cup is eccentric with respect to the carriage, that is, it is positioned closer to a peripheral side of the carriage on which it is mounted with respect to the centre of the carriage. Preferably, the suction cup extends upwards from a lateral area of a base; preferably, said base, and therefore the suction cup, has an angular position which may be adjusted by rotation around a central vertical axis on the carriage, substantially orthogonal to a locking plane of the workpieces defined by the suction cups of the apparatus, and rotating the suction cup with respect to the carriage modifies the eccentricity of the suction cup with respect to the carriage carrying it. Each suction cup is preferably adjustable so that it may be positioned eccentrically with respect to the carriage carrying it in selective correspondence with at least two of said sides and preferably three and more preferably all four of said sides, so as to assume at least two, preferably three, even more preferably four alternative positions, eccentric with respect to the carriage.

Preferably, the apparatus comprises a slide on which said workpiece-holding devices and said distance adjustment system are arranged, wherein said slide is movable along a translation axis, preferably numerically controlled; preferably, said the axis is parallel to the longitudinal development of said beams; preferably, said slide is movable along a guide provided on a base.

According to another aspect, the invention relates to a machine tool comprising: at least one working head suitable for carrying at least one tool, of the type with at least three work axes, and at least one workpiece-holding apparatus according to one or more of the embodiments disclosed above.

Preferably, the machine tool comprising a gantry on which the at least one working head is arranged, said head preferably being movable horizontally along the main development of said gantry and vertically, preferably with an orthogonal relative movement between the at least one workpiece-holding apparatus and the gantry or said working head.

For example, the gantry may be fixed with respect to the ground and is the at least one workpiece-holding apparatus which moves with respect to the gantry to provide, for example, a work axis of the working head along the relative motion direction. Or, the at least one workpiece-holding apparatus is fixed with respect to the ground and the gantry moves with respect to the at least one apparatus for, for example, realizing a work axis of the working head along the relative motion direction.

### Brief description of the drawings

The invention will be better understood by following the description and the accompanying drawings, which illustrate some exemplary and non-limiting embodiments of the invention. More in particular, in the drawings:
Fig. 1 shows a schematic top view of a machine tool with two workpiece-holding apparatuses according to the invention, wherein each apparatus carries a respective workpiece;
Fig. 2 shows a schematic front view of the machine tool of Figure 1;
Fig. 3 shows a schematic side view of the machine tool of Figure 1, sectioned along the line III-III of Figure 2;
Fig. 4 shows a schematic side view of the machine tool of Figure 1, sectioned along the line IV-IV of Figure 2;
Fig. 5 shows a schematic top view of an apparatus according to the invention, used in the machine of Figure 1;
Fig. 5A is an enlargement of Figure 5;
Fig. 6 shows a schematic top view of the machine of Figure 1, in which a single workpiece is shown locked on both workpiece-holding apparatuses;
Fig. 7 shows a schematic front view of the machine tool in the configuration of Figure 6;
Fig. 8 shows a schematic side view of the machine tool of Figure 1, sectioned along the line VIII-VIII of Figure 7;

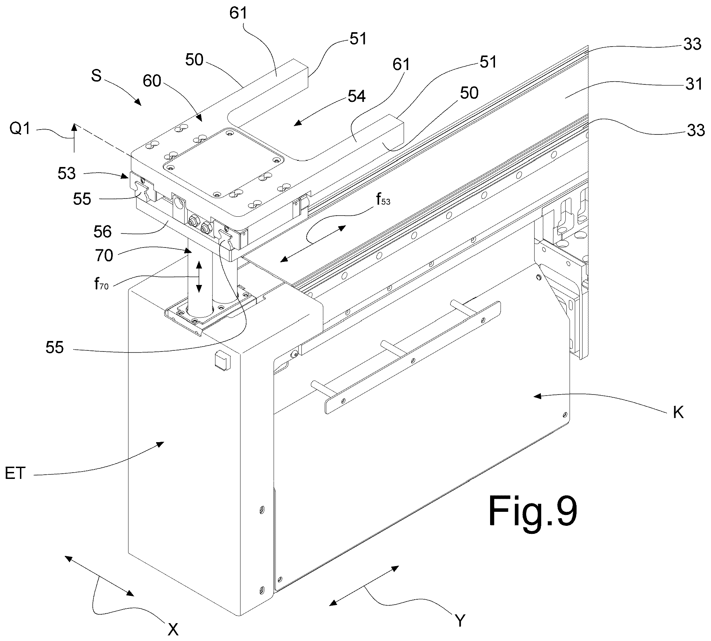

Fig. 9 shows a schematic axonometric view of a workpiece-holding device of a workpiece-holding apparatus according to the invention, in which the reference body is visible in the raised position, in a first working position (frontal abutment on the workpiece);

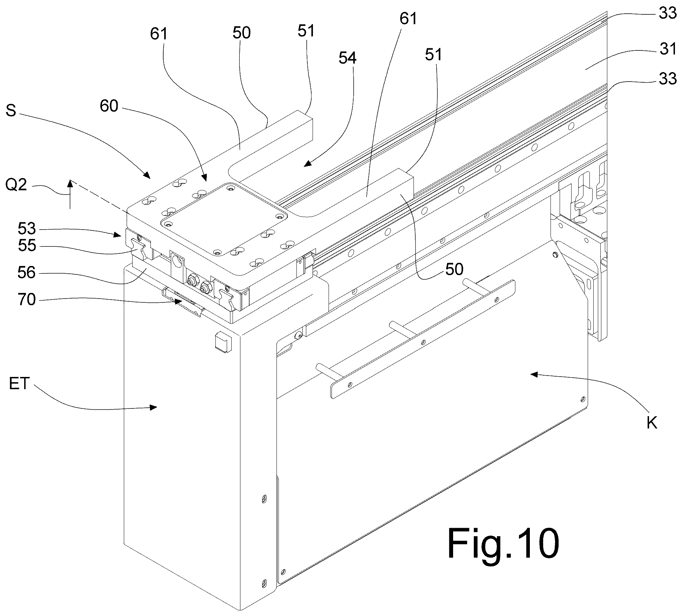

Fig. 10 shows a schematic axonometric view of a workpiece-holding device of a workpiece-holding apparatus according to the invention, in which the reference body is visible in the lowered position;

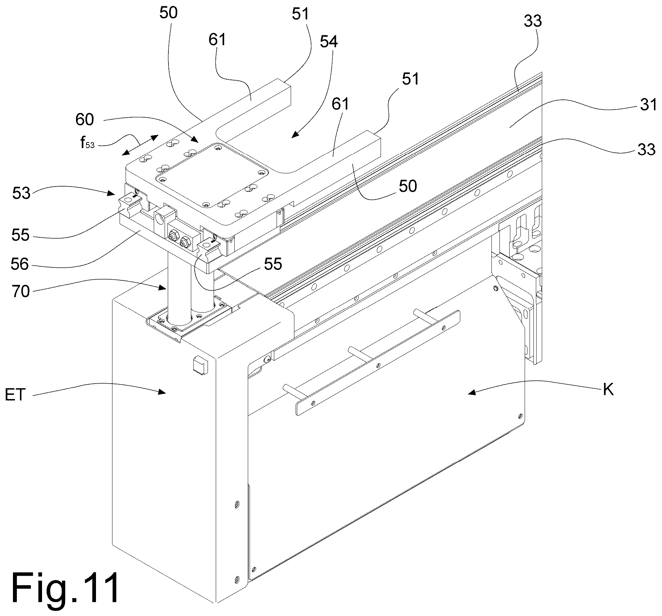

Fig. 11 shows a schematic axonometric view of a workpiece-holding device of a workpiece-holding apparatus according to the invention, in which the reference body is visible in the raised position, in a second working position (front abutment on the workpiece);
Fig. 12 shows a schematic axonometric view of two adjacent workpiece-holding devices of a workpiece-holding apparatus according to the invention, in which the reference bodies are visible in the raised position, respectively in a first working position to create a front abutment for a workpiece locked on two carriages, and in a second working position to create a lateral abutment for the workpiece;
Fig. 13 shows a schematic axonometric view of two adjacent workpiece-holding devices of a workpiece-holding apparatus according to the invention, in which the reference bodies are visible in a lowered position with respect to a workpiece locked on two carriages, in order to allow machining of the edges of the workpiece;
Fig. 14 shows a schematic axonometric view of a workpiece-holding device adjacent to a lateral wall, of a workpiece-holding apparatus according to the invention, in which the reference body is visible in a raised position in a first working position to create a front abutment for a workpiece locked on two carriages, while the lateral abutment is implemented by the dotted lateral wall;
Fig. 15 shows a schematic axonometric view of the workpiece-holding device of figure 14 in which the reference body is visible in the lowered position with respect to a workpiece locked on two carriages;
Fig. 16 shows a schematic top view of a machine tool variant of that of Figures 1-8, in which the gantry is movable along the Y-axis and the workpiece-holding apparatus is stationary.
Fig. 17 shows a schematic lateral view of the machine tool of Figure 16.

### Detailed description of embodiments

With reference to the above-mentioned figures, a machine tool, or work centre, according to the invention, is generally indicated by the reference numeral 1. A workpiece-holding apparatus used in such a machine tool 1 is collectively designated by the reference numeral 10.

In general, the following detailed description of exemplary embodiments refers to the accompanying drawings. Same reference numerals in different drawings identify the same or similar elements. Also, the drawings are not necessarily to scale. The following detailed description does not limit the invention. Rather, the scope of the invention is defined by the appended claims.

The reference throughout the specification to "one embodiment" or "the embodiment" or "some embodiments" means that a particular feature, structure or element described in relation to an embodiment is included in at least one embodiment of the object described. Therefore, the phrase "in one embodiment" or "in the embodiment" or "in some embodiments" in the description does not necessarily refer to the same embodiment or to the same embodiments. Furthermore, the particular features, structures or elements may be combined in any suitable manner in one or more embodiments.

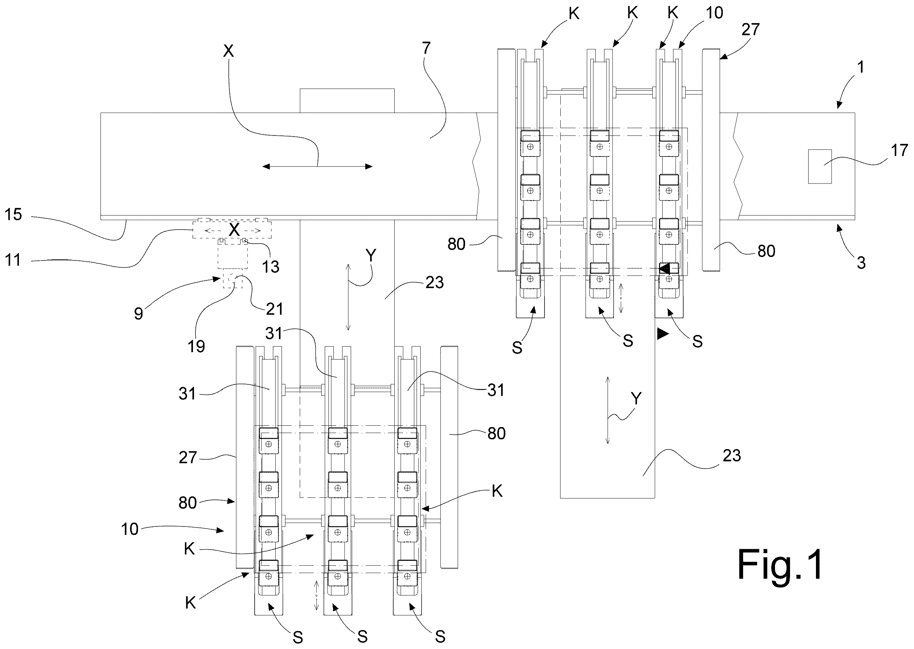

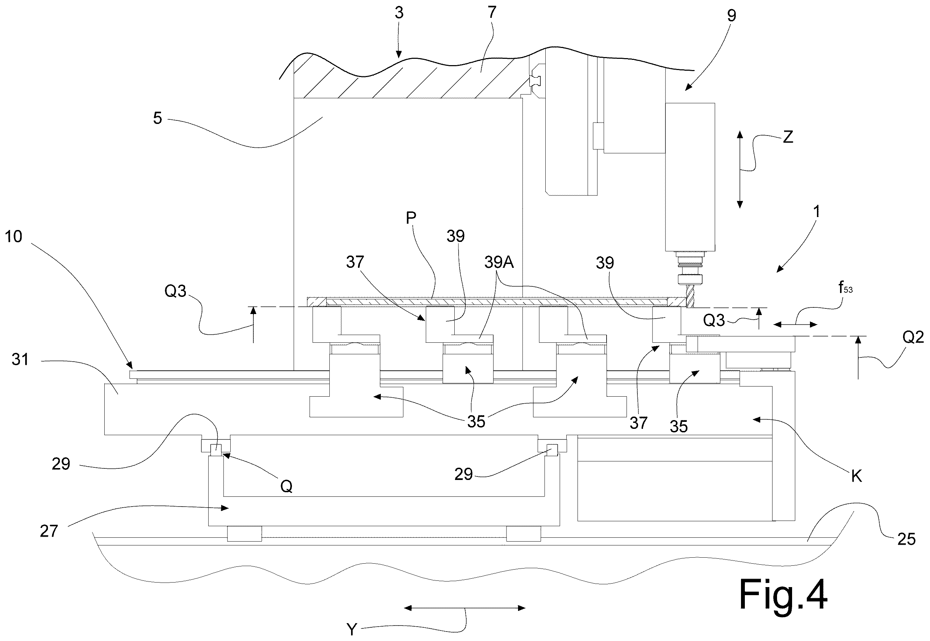

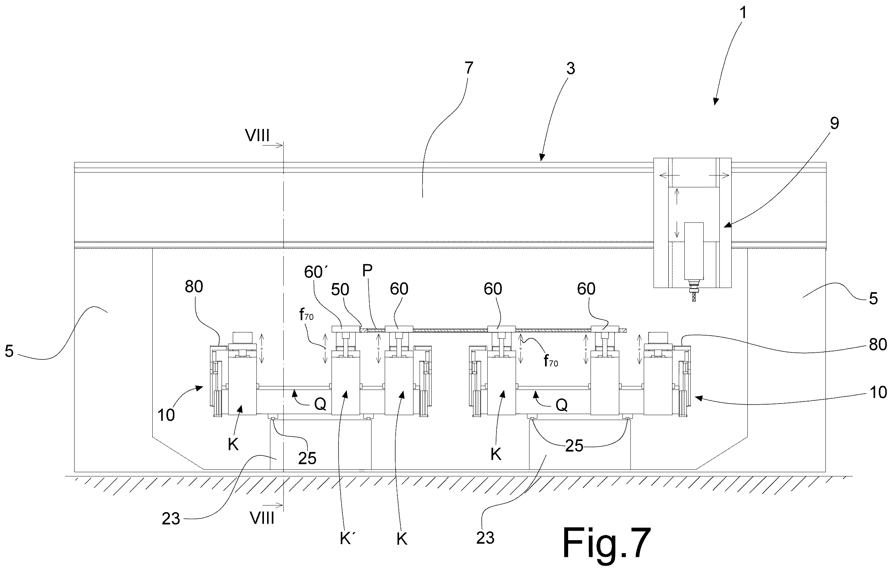

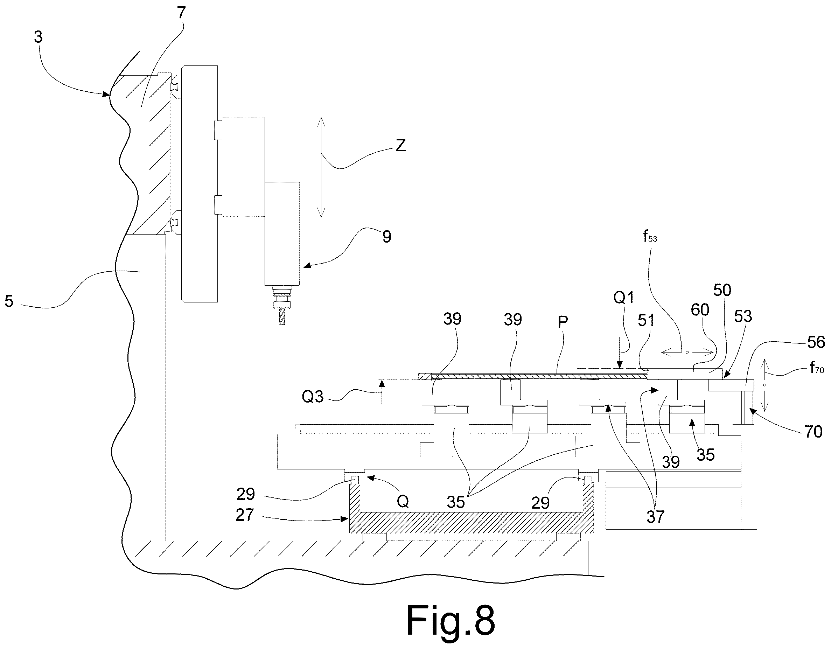

Figs. 1 to 8 show views of a machine tool or work centre 1 in one possible embodiment. In the illustrated embodiment, the machine tool 1 is a gantry machine. It has a portal 3, with uprights 5 and a crosspiece 7. A working head, or operating head, generally indicated by 9, is mounted movably on the crosspiece 7. The working head 9 may be mounted on a slide 11 via sliding guides 13 oriented vertically, i.e. orthogonally to the crosspiece 7. The slide is movable along the crosspiece 7 via sliding guides 15 parallel to the crosspiece 7. There may be multiple movable working heads 9 on the crosspiece 7.

The working head 9 may be provided with a movement numerically controlled by a central control unit schematically indicated with 17. More specifically, the working head 9 may move along a first numerically controlled translation axis X, parallel to the crosspiece 7 and the guides 15, and along a second numerically controlled translation axis Z, vertical, parallel to the guides 13.

The working head 9 may carry one or more electro-spindles which may be provided with one or more rotating tools. The diagram of Figs. 1-8 shows a single electro-spindle 19 carrying a single tool 21, rotating around an axis A substantially parallel to the numerically controlled Z-axis.

The gantry structure of machine tool 1 described so far is only one of the possible configurations of the machine tool. In other embodiments, the machine tool may have a column structure, with the working head supported by a vertical column, which may be fixed or movable horizontally along a numerically controlled X-axis, and on which the working head may be vertically movable along a numerically controlled Z-axis.

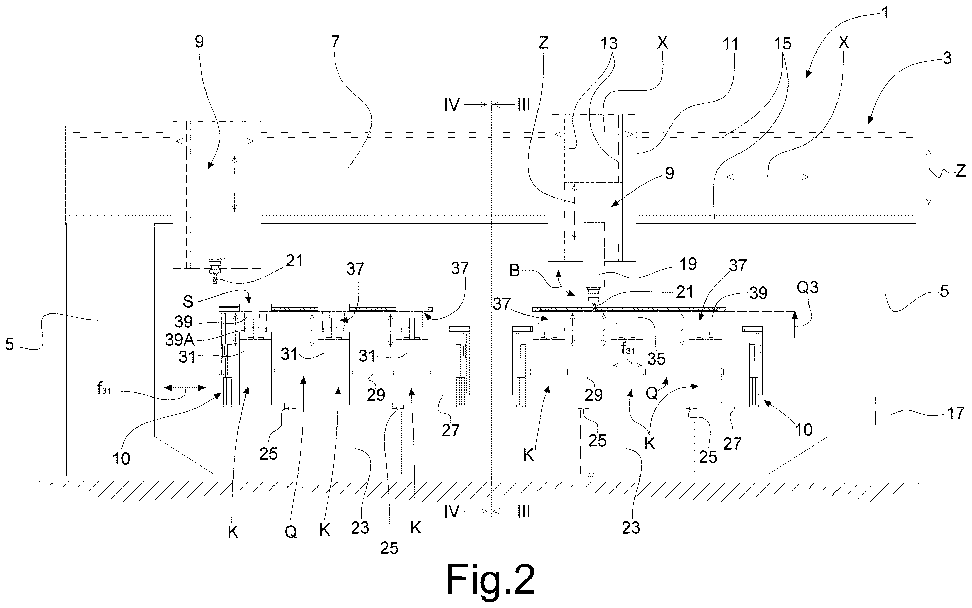

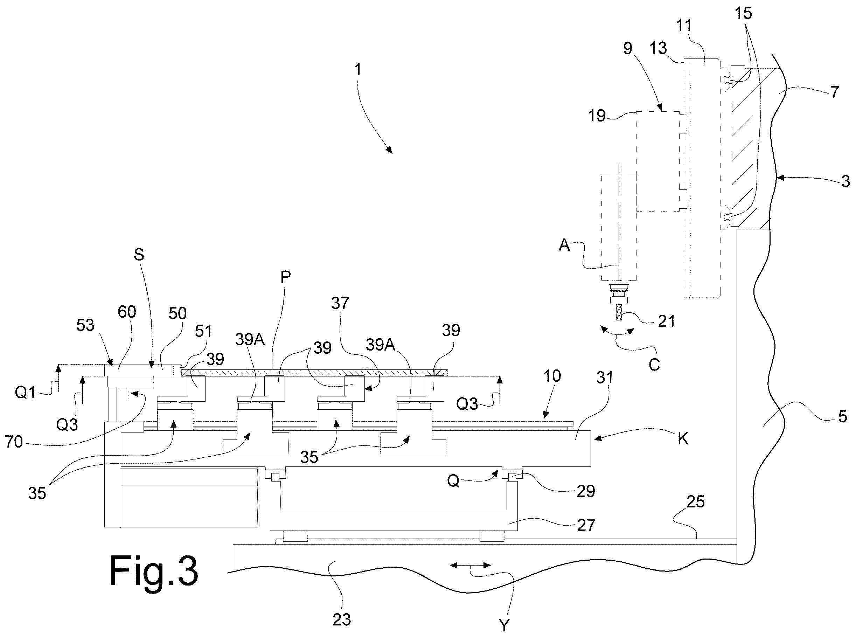

In the illustrated embodiment, the working head 9 may be without rotary numerically controlled axes. In other embodiments, the working head 9 may be provided with one or more, e.g. two, numerically controlled rotary axes. By means of said numerically controlled rotary axes, rotation movements may be imparted to the electro-spindle 19, and therefore to the tool 21, according to the arrows B and C schematically indicated in Figs. 2 and 3.

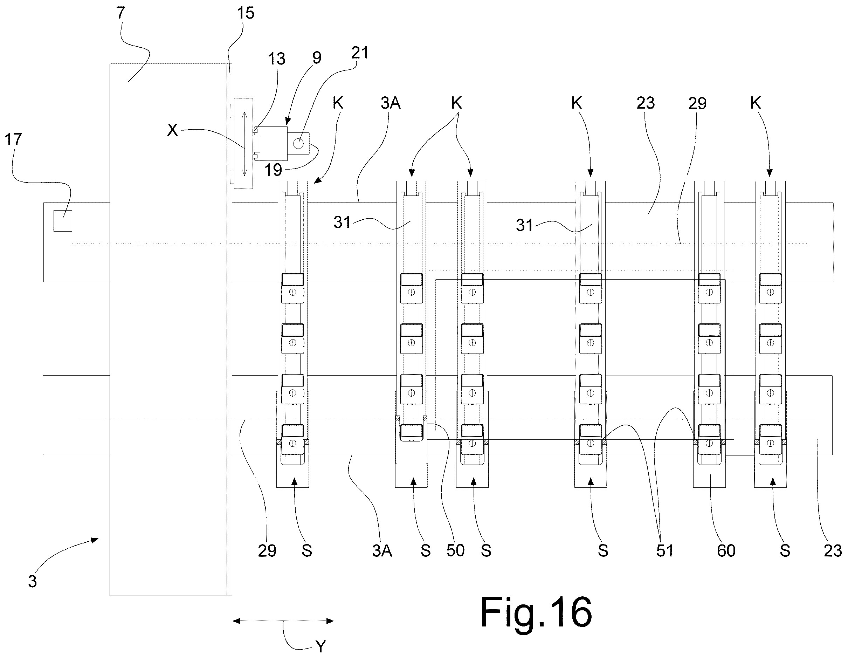

In some embodiments, one of which will be described below and shown in Figure 16, the working head 9 may be configured to move along a third numerically controlled translation axis, orthogonal to the X and Z axes.

In the illustrated embodiment, workpiece-carrying apparatuses 10 are associated with the gantry 1. In other embodiments, only one workpiece-holding apparatus may be provided.

In this example, each workpiece-holding apparatus comprises or is arranged on a base 23; the bases associated with the workpiece-holding apparatuses are substantially parallel to each other. In other embodiments, only one base may be provided. In the illustrated embodiment, each base 23 extends in a horizontal direction and substantially at 90° with respect to the crosspiece 7 and develops under said crosspiece.

In other embodiments, not shown, a single base 23 may be provided which may be placed substantially in the centre of the gantry 3.

Each apparatus 10 comprises a slide 27 sliding on a base 23 along respective main guides 25 provided on the base.

The movement of each slide 27 may be controlled according to a third numerically controlled translation axis, indicated with Y for the two slides 27.

On each slide 27 a plurality of workpiece-holding devices K are arranged (in these examples three devices K, but the number may range from 1 to a number greater than 3). Each workpiece-holding device K comprises a longitudinal beam (or bar) 31.

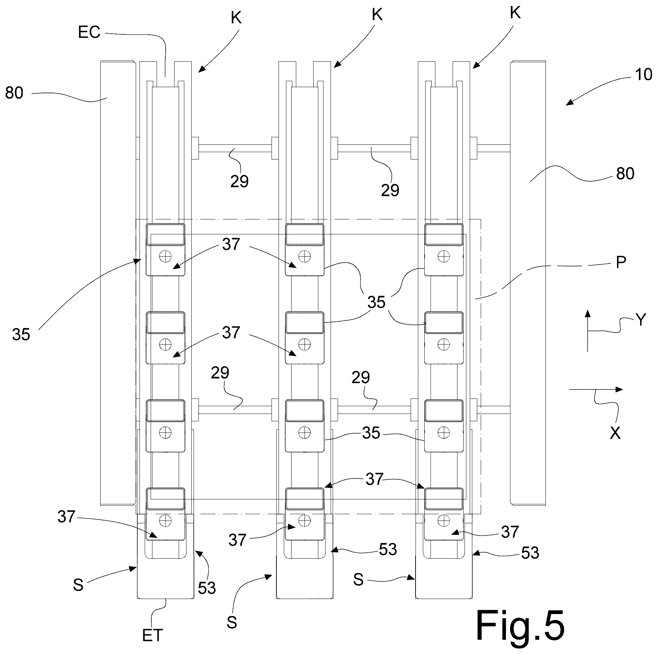

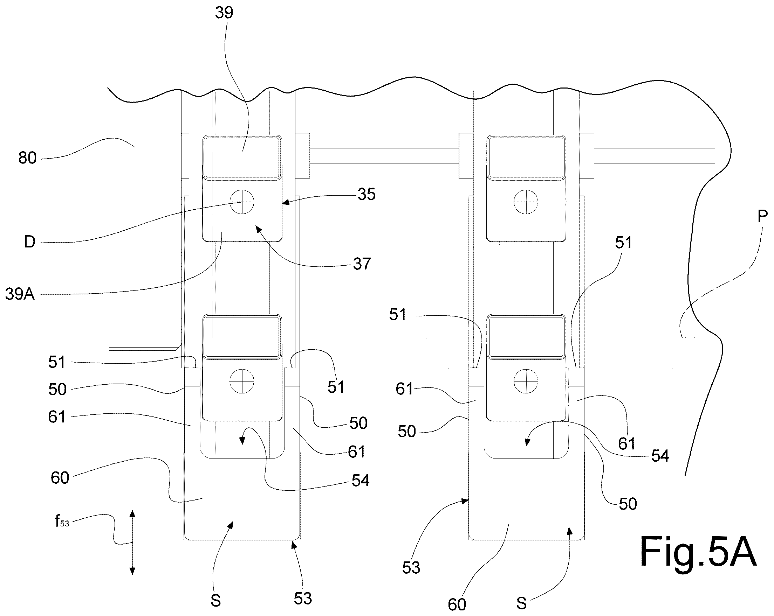

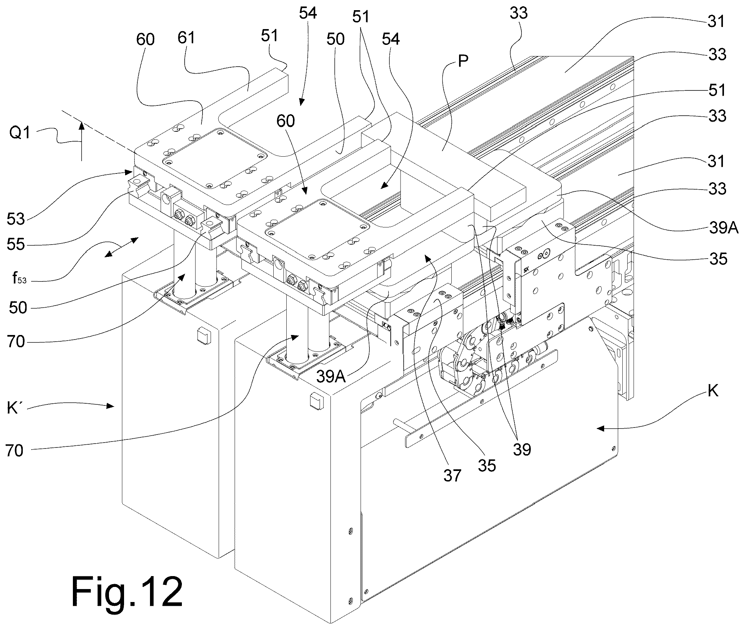

As clearly highlighted in Figures 5-5A , and in Figures 12-15, on each longitudinal beam one or more carriages 35 are provided, movable along the longitudinal development of the beam 31, for example on secondary guides 33.

On each carriage 35 there is a device 37 for locking the piece to be machined.

The beams 31 comprise, in the longitudinal direction, two opposite ends, defined for example as the head end ET and the tail end EC.

The workpiece-holding apparatus 10 also comprises a spatial reference system S for the workpieces to be machined in the machine tool 1, which provides abutment surfaces for the workpieces, provided on at least one or more beams 31, as better explained below.

The workpiece-holding devices K are arranged so as to have their respective longitudinal beams 31 laid parallel to each other.

Each apparatus 10 comprises a system Q for adjusting the distance between the beams 31 of said workpiece-holding devices K. Such system for adjusting the distance Q comprises, for example, one or more adjustment guides 29, integral with the respective slide 27, on which the longitudinal beams 31 are slidably mounted.

In the illustrated embodiment, each slide 27 is provided with adjustment guides 29, which are oriented at 90° with respect to the main guides 25. In other embodiments, the adjustment guides 29 may be parallel to the guides 25.

Each beam or bar 31 may be adjusted along the adjustment guides 29 according to the double arrows f31, creating the system Q for adjusting the distance between the beams 31 of said workpiece-holding devices K. In this way, the position of the beams 31 with respect to the slide 27 and the mutual distance between the beams 31 in the direction of the adjustment guides 29 may be adjusted.

In general, in the present description and in the accompanying claims, a beam or bar means a longitudinally developed support, having a longitudinal dimension greater than the remaining transverse dimensions. The beam or bar may consist of a monolithic body, or of several components assembled together to form a rigid structure, for example by welding, or using screws and bolts or in another suitable manner.

With the described configuration, workpieces P mounted on the beams 31 in the manner described below may be moved with respect to the working head 9 and the tool 21 according to three numerically controlled translation axes X, Y and Z. These movements are imparted partly to the work head 9 (X, Z axes) and partly to the workpieces (Y axis). In other embodiments, it is possible to provide for the working head 9 to be provided with movements along three numerically controlled translation axes X, Y, Z, while the workpiece-holding devices K (with their respective beams) on which the piece is constrained may be mounted on a fixed structure, rather than on a slide 27 movable along the Y axis, whilst still maintaining the adjustability of the mutual distance between the beams 31. An embodiment of this type is shown in Figure 16.

In the illustrated embodiment, four carriages 35 are provided for each beam 31. It should, however, be understood that the number of carriages 35 for each beam 31 may be different. For example, one, two, three or more than four carriages 35 may be provided for each beam 31. The position of each carriage 35 along the respective beam 31 may be adjustable and lockable.

Each of the above-mentioned adjustments of the position of the beams 31 on the slides 27 and of the carriages 35 on the beams 31 may be manual or servo-assisted. Preferably, the adjustments are servo-assisted and controlled by electronically controlled servomotors, so that the operator may set the positions and mutual distances of the beams 31 on the slides 27, as well as the positions of the carriages 35 on each beam 31, depending on the shape and size of the workpieces to be machined. Examples of placement will be described below. When the machine tool 1 is provided with two or more workpiece-holding apparatuses 10 with slides 27, the position of the beams 31 and the carriages 35 may be different for the slides 27.

In some embodiments, a servomotor may be provided for each beam 31. In this case, the positioning of the beams 31 along the guides 29 may take place in shorter times, by moving the beams 31 simultaneously. In other embodiments, however, it is possible to contemplate that a single actuator selectively moves one or the other of the beams 31 of the same workpiece-holding apparatus 10. For example, for this purpose, an electric motor may be provided that drives a transmission member such as a threaded rod or a belt. The beams may be provided with selective engagement devices for the transmission member. At different time intervals, the individual beams are connected to the transmission member, so that they may be moved sequentially by the same actuator. Using a single actuator results in a lower cost machine, but requires longer set-up times.

Similar alternatives may be contemplated for carriages. In some embodiments, a servo motor may be provided for each carriage 35. In this case, the positioning of the carriages 35 along the beams 31 may take place in shorter times, by moving the carriages 35 simultaneously. In other embodiments, however, it is possible to contemplate that a single actuator selectively moves one or the other carriage 35 associated with the same beam 31. For example, for this purpose, an electric motor may be provided for each beam 31 which drives a transmission member such as a threaded rod or a belt. The transmission member may extend parallel to the respective beam 31 and the carriages 35 may be provided with selective engagement members for the transmission member. At different time intervals, the individual carriages are connected to the transmission member, which may thus be moved sequentially by the same actuator along the beam 31. Using a single actuator results in a lower cost machine, but requires longer set-up times.

As mentioned, to fix a workpiece on a workpiece-holding device K, each carriage 35 has an upper surface on which a locking member 37 is provided. In the illustrated embodiment, each locking member comprises a suction cup 39.

In the context of the present description and the accompanying claims, a suction cup is generically understood to mean a vacuum locking member, i.e. one in which the locking of the piece is obtained by generating a negative pressure in a confined volume, delimited at least in part by the piece to be locked, which in this way remains adherent to the locking member.

Each suction cup 39, for example, extends laterally from a base 39A arranged on the carriage 35, thus resulting eccentric with respect to the centre of the respective carriage 35. Each suction cup 39 may be oriented so as to protrude, with respect to the base 39A (and preferably with respect to the carriage 35 on which it is mounted), from different sides of the carriage itself. In practice, therefore, the suction cup 39 may be positioned eccentrically with respect to the centre of the carriage close to one of its sides, selectable from among the four sides of the carriage itself.

The suction cups 39 associated with each workpiece-holding device K (and therefore associated with each workpiece-holding apparatus 10) may be substantially coplanar and may thus define a locking plane for the workpieces to be machined. Preferably, the suction cups 39 are all at the same height with respect to the floor on which the machine tool 1 is mounted, so that the workpiece locking plane is horizontal.

Advantageously, each locking member 37 with its respective suction cup 39 may be mounted on its respective carriage 35 so that it may rotate around an axis D orthogonal to the locking plane of the workpieces. In some embodiments, each locking member 37 is mounted so that it may rotate 360° about the axis. This, however, is not essential. In some embodiments, each locking member 37 may be mounted so as to rotate only 180°, or even only 90° around its respective axis.

Figures 5, 12-15 show the case of two carriages 35 arranged on the same beam 31 in which the respective locking members 37 are rotated differently from each other, i.e. one arranged at 180° with respect to the other, with the respective suction cups 39 which are brought closer together, in order to lock a piece of small dimensions.

The rotation of the locking members 37 and of the respective suction cups 39 with respect to the carriage 35 may be obtained by means of a numerically controlled servomotor, not shown, controlled by the central control unit 17. In this case, it may be contemplated that each suction cup 39 may assume any angular position around its own axis orthogonal to the carriage.

In other embodiments, the rotation may be controlled by a simpler actuator, which may provide a fixed number of working positions, for example two, three or four working positions, angularly offset from each other by 90°. It is also contemplated that the angular position adjustment occurs differently for different carriages, for example on some with a numerically controlled actuator, on others with an actuator with predetermined multiple positions. One or more additional suction cups may also be provided, mounted in a fixed or manually adjustable manner.

Before starting operations on the workpiece using the tool associated with the working head, the machine tool should be told, via the spatial reference system S, where the workpiece is located on the workpiece-holding apparatus.

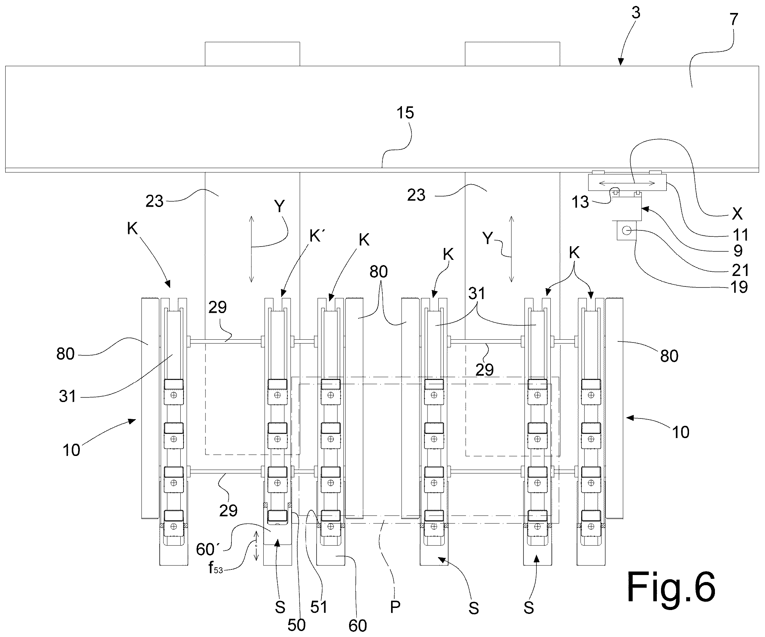

In Figures 1-4, two workpieces P to be machined are shown, one for each piece-holding apparatus 10, and in which each workpiece is a flat rectangular frame (in general any piece may be machined, preferably of a flat type, such as solid or non-solid panels, of any shape, not exclusively of a polygonal shape). Figures 6-8 show the case in which the two workpiece-holding apparatuses 10 of the machine tool 1 together carry a common workpiece P (also in this case a flat frame). In this second case, the workpiece P is locked by locking devices 37 present on the beams 31 of both apparatuses.

In this regard, at least one workpiece-holding device K further comprises at least one lateral reference surface 50 for the workpiece P to be machined, against which the workpiece is configured to abut to establish a first spatial reference of the work-piece in the machine tool to which the workpiece-holding apparatus is associated, such as a reference relative to a position along an X-axis in a Cartesian X-Y reference system.

Furthermore, such a workpiece-holding device K further comprises a front reference surface 51, orthogonal to the lateral reference surface 50, for the workpiece, against which the workpiece is configured to abut to create a second spatial reference of the workpiece in the machine tool 1, such as a reference relative to a position along a Y-axis in a Cartesian reference system X-Y.

Advantageously, such a workpiece-holding device K also comprises a device 53 for changing the longitudinal position along the longitudinal extension of the respective beam 31 (arrow f53, in this example parallel to Y) for the at least one lateral reference surface 50, in order to create, if necessary, a first spatial reference for a work-piece being machined on the machine 1. Such variation device 53 will be better described below.

The workpiece-holding apparatus may include, among all the workpiece-holding devices present in the apparatus 10, a single workpiece-holding device K as now described, or which comprises one or more lateral reference surfaces, the front reference surface and the device for varying the longitudinal position, while the other workpiece-holding devices may be without them; preferably at least two, and even more preferably (as in the example relating to the proposed figures) all the workpiece-holding devices of the plurality that make up the workpiece-holding apparatus comprise the lateral reference surfaces 50, the front reference surface 51 and the device for varying the longitudinal position 53.

In these examples, there is also a pair of longitudinal flanks 80, fixed, i.e. integral with the slide, which are parallel to the beams 31, and which act as a further lateral reference surface for the workpieces being machined. Such flanks 80 are positioned laterally to the plurality of beams 31 mounted on the slide of the apparatus 10, and are in practice the most external lateral references for the workpieces on the work-piece-holding apparatus. It is clear that in other examples there may also be a single fixed longitudinal flank, preferably always placed in a lateral position.

In the preferred embodiment, the at least one workpiece-holding device K comprises a reference body 60 provided on the respective beam 31, and on such reference body 60 both a pair of lateral reference surfaces 50 and the front abutment surface 51 are defined; the reference body 60 is configured to be moved along the longitudinal development of the beam 31 by means of the device for varying the longitudinal position 53.

In particular, the reference body has two lateral sides defining respective lateral reference surfaces 50, arranged on opposite sides with respect to a front face of the reference body which defines the front reference surface 51.

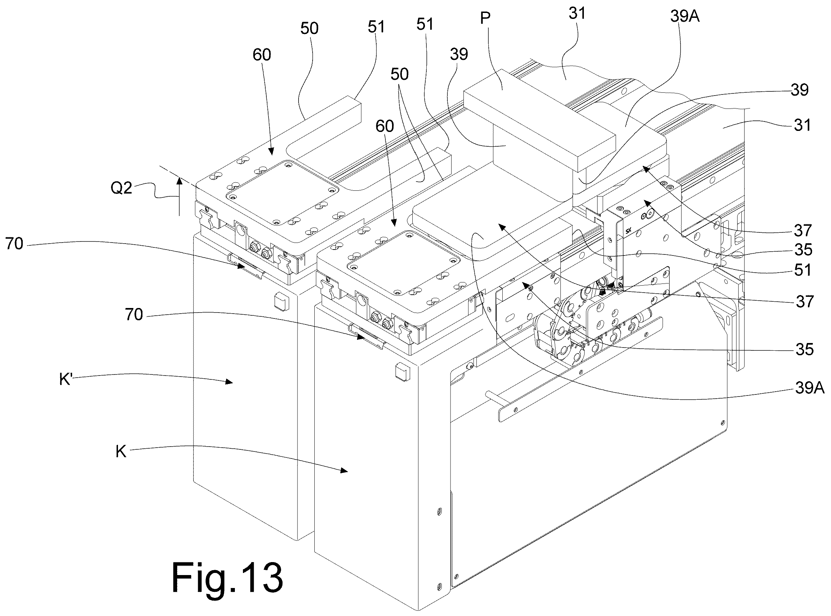

The at least one workpiece-holding device K comprises a device 70 for moving the reference body 60 from top to bottom and vice versa (for example vertical, arrow f70), from a first height Q1 in which the reference positions for the workpiece are expressed, to a second height Q2, lower than the first height Q1, in which the reference body 60 is completely lower than the support surface Q3 of the workpiece on the suction cups 39 of the carriages 35 (as is clearly evident from the comparison of Figures 12 and 13), and preferably also lower than the base (height Q4) from which the suction cup develops. The up-down movement of the reference body defined by the device 70 is, for example, servo-assisted, for example numerically controlled, and associated with the electronic control unit 17. Such a displacement device may comprise a displacement actuator, preferably of an automated type, such as a two-position pneumatic cylinder. Obviously, alternative solutions may include any type of actuator, for example hydraulic, electromechanical, manual, etc.

To avoid interfering with the locking member 37, the front face defining the front reference surface 51 of the reference body 60 comprises a concave portion 54 with a concavity open towards the first workpiece-holding carriage 35 present on the respective beam 31. Such concave portion 54 is configured to be able to accommodate at least in part the locking member 37 of the piece present on the first workpiece-holding carriage 35.

For example, the reference body 60 may comprise two teeth 61 elongated in the longitudinal development direction of the beam 31, and the vertex regions of the two teeth 61 define the front reference surface for the workpiece 51 (which is therefore divided into two separate portions); the external lateral sides of the teeth 61 instead define two respective opposite lateral reference surfaces 50 for the piece.

The teeth are spaced apart from each other to a greater extent than the transverse width of the locking member 37, and in this example, of the base from which the suction cup 39 develops, so that the locking member of the workpiece may be housed at least partially between them.

In the respective workpiece-holding device K, the reference body 60 is positioned approximately at the head end of the beam 31 and preferably has two longitudinal reference positions.

A first longitudinal reference position of the reference body 60 is retracted towards the head of the beam on which the body moves. In this first position, the reference for a piece locked on a carriage arranged slidably on the same beam 31, occurs by abutting the piece against the front reference surface 51 of the reference body.

A second longitudinal reference position of the reference body 60 is further advanced, with respect to the first longitudinal reference position, along the same beam 31 (starting from the head of the beam). In this case, the reference is operative for a workpiece locked on another beam 31, adjacent to that of the reference body in the second position, which belongs to another workpiece-holding device K, as shown in Figures 6-8 and 12-13, and in which such workpiece abuts against the lateral reference surface 50 of the reference body 60. In particular, in Figures 6-8, the frame P comes into lateral contact (to define the position in X of the frame) with its left side against the lateral reference surface 50' of the reference body 60' of the workpiece-holding device K', with the reference body 60' translated along the beam 31' to assume the second reference position. All other reference bodies 60 of the other workpiece-holding devices K, including the one adjacent to the device K', are in the first reference position and contact with their contact surfaces 51 against the lower side of the frame P and define the reference of the workpiece in Y.

As may be seen in Figures 1, 5 and 6, with multiple workpiece-holding devices K having movable reference bodies 60 along parallel beams, such reference bodies all have the same first reference position for the bodies on the beams, so that the front reference surfaces 51 of the reference bodies 60 on the beams 31 are all aligned when a first workpiece abuts one or more of them (in practice they lie on a vertical plane). Such first position is essentially the position along the Y-axis in the Cartesian reference plane X-Y of the apparatus 10. These first positions are for example fixed in apparatus 10 (and in this case represent the "zero" of the Y axis). For example, the first longitudinal reference position is the initial position (i.e. the closest to the head of the beam 31) assumed by the reference body 60 along the beam: in this case, from such first position, the reference body 60 may be moved along the beam only in one direction, i.e. towards the second reference position for a workpiece placed on an adjacent beam, to define for such second workpiece the position along the X axis in the Cartesian reference plane X-Y.

In Figures 1-5, each frame P carried by its own workpiece-holding apparatus 10, comes into lateral contact (to define the position in X of the frame) with its left side against the left flank 80' of the apparatus K'. All the reference bodies 60 of the workpiece-holding devices K, including the one adjacent to flank 80', are in the first reference position and contact with their contact surfaces 51 against the lower side of the frame P and define the reference of the workpiece in Y.

In preferred embodiments, the device for varying the longitudinal position 53 comprises one or more sliding guides 55 provided on a support base 56, and the reference body 60 is slidably arranged thereon. Such sliding guides 55 are parallel to the longitudinal development direction of the respective beam 31.

The movement of the reference body is, for example, servo-assisted, for example numerically controlled, and associated with the electronic control unit 17. For example, a movement actuator is provided, placed between the support base 56 and the reference body 60, which allows the body 60 to be moved on the guides, i.e. along the beam. The actuator is preferably of an automated type, such as a two-position pneumatic cylinder. Obviously, alternative solutions may include any type of actuator, for example hydraulic, electromechanical, manual, etc. The reference body 60 may possibly be moved by hand.

From an operational point of view, refer for example to Figures 12 and 1315. A workpiece P (in this case of small dimensions; but it may be considered as the end portion of a piece for example in the form of a slat or the corner portion of a larger piece), is locked (by means of the locking members 37) on two carriages 35 of a beam 31 of a first piece-holding device K. At the head of the beam there is the reference body 60 in the first reference position (i.e. raised upwards of the device 70). The carriage with the workpiece is moved towards the head of the beam until it comes into contact with the front reference surfaces 51 of the reference body 60, obtaining the reference in Y of the workpiece.

A second workpiece-holding device K' has its own reference body 60 in the second reference position (i.e. lifted upwards by the device 70 and moved along the beam 31 by the device 53). The workpiece-holding device K' is translated parallel to Y in its own slide, so as to bring it adjacent to the beam of the first workpiece-holding device K, causing the lateral reference surface 50 of the reference body of the second workpiece-holding device K' to abut against the lateral end of the workpiece P, thus obtaining the reference in X of the workpiece.

At this point, the machine knows the position of the workpiece in the working field: the position of the slide in the machine is known, the positions of the individual workpiece holders and of the individual carriages and of the reference bodies are known. All these elements are associated with numerical control type movement or position identification modes.

To enable machining of the external edges of the piece, it is necessary to lower the reference bodies 60 into the second working position, as shown in Figure 13.

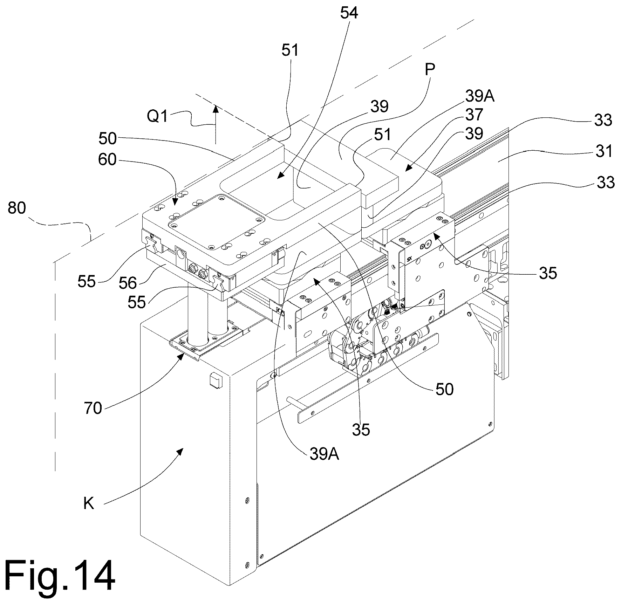

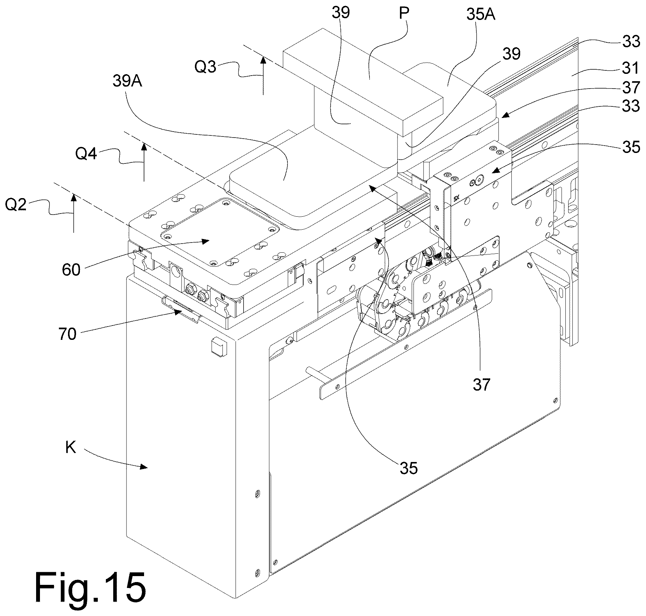

Figures 14 and 15 show the case in which the workpiece P rests against a lateral flank 80 (and in this case the reference of a single reference device K is sufficient, unlike the previous case, in which at least two workpiece-holding devices K provided with reference bodies 60 were necessary).

Once the position of the workpiece is known in the machine and the reference bodies have been lowered (if necessary), the machine begins its machining cycle, for example by moving the workpiece-holding apparatus (or apparatuses) along the base 23 under the working head 9, thus being able to machine the piece at least along the three Cartesian axes X, Y and Z, in a known manner.

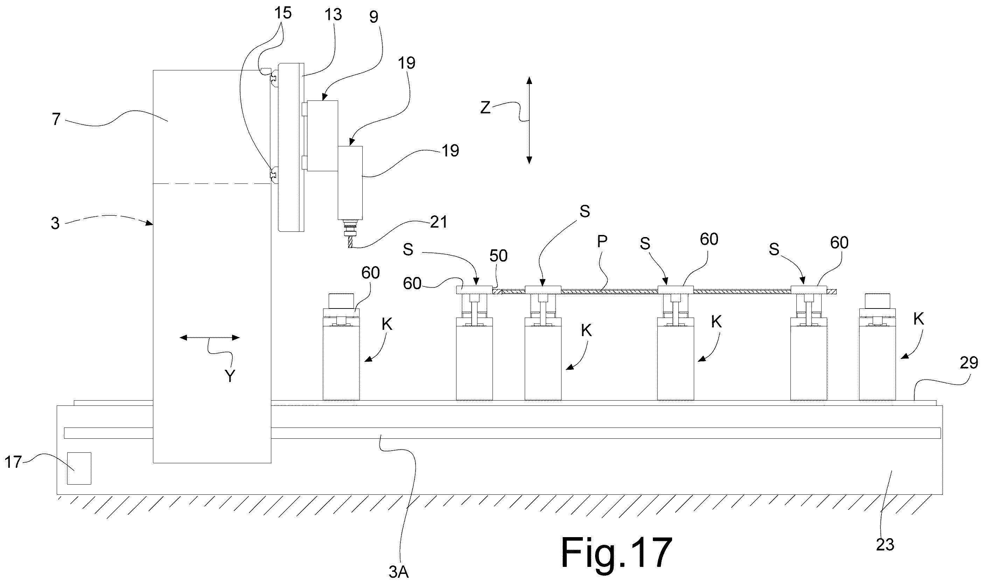

Figures 16 and 17 show a machine tool or work centre 1, in which the portal 3 is movable along one or more guides 3A along Y, to create the work axis in Y for the working head 9. The workpieces are locked, in this example, on a single workpiece-holding apparatus 10 according to the invention, which is stationary with respect to the gantry 3.

Such apparatus 10 comprises one or more bases 23 on which the workpiece-holding devices K are directly arranged (i.e. there are no slides 27), similar to those of the previous examples, with the difference that the respective beams 31 are preferably oriented orthogonally to the Y axis, and the system Q for adjusting the distance between the beams 31 of said workpiece-holding devices K takes place on adjustment guides 29 parallel to Y. During the machining of the working head 9, the devices K are stationary (they are only set for the distance relation and to create the stops of the reference systems S).

It is understood that what has been illustrated represents only possible non-limiting embodiments of the invention, which can vary in forms and arrangements without departing from the scope of the concept underlying the invention. The possible presence of reference numbers in the attached claims has the sole purpose of facilitating the reading thereof in the light of the foregoing description and the accompanying drawings and does not in any way limit the scope of protection.

## Claims

1. A workpiece-holding apparatus for a machine tool, comprising a plurality of workpiece-holding devices, which in turn comprise:
- a longitudinal beam;
- at least one carriage movable along the longitudinal development of the beam;
- a workpiece locking member provided on the carriage,
wherein at least one of said workpiece-holding devices further comprises:
- at least one lateral reference surface for the workpiece to be machined, against which the workpiece is configured to abut to establish a first spatial reference of the workpiece in the machine tool to which the workpiece-holding apparatus is associated;
- a front reference surface, orthogonal to the lateral reference surface, for the workpiece to be machined, against which the workpiece is configured to abut to establish a second spatial reference of the workpiece in the machine tool to which the workpiece-holding apparatus is associated;
- a device for varying the longitudinal position along the longitudinal development of the beam for said at least one lateral reference surface, to establish said first spatial reference for a workpiece being machined on the machine to which the workpiece-holding apparatus is associated.

2. The apparatus according to claim 1, wherein said at least one work-piece-holding device comprises a reference body provided on said beam, on which said at least one lateral reference surface is defined, said reference body being configured to be moved along the longitudinal development of the beam by said device for varying the longitudinal position; preferably, said front reference surface is also defined on said reference body, preferably two said lateral reference surfaces opposed to each other with respect to the front reference surface being provided; preferably, said reference body has two lateral flanks defining respective lateral reference surfaces, arranged on opposite sides with respect to a front face of the reference body that defines said front reference surface.

3. The apparatus according to claim 2, wherein, in said at least one workpiece-holding device, said reference body has two reference positions, a first retracted longitudinal reference position toward the end of the respective beam on which it moves, in which, in said first position, the reference is established by the workpiece locked on the beam abutting against said front reference surface, and a second longitudinal reference position, more advanced along the beam compared to said first position, in which the reference is established for a workpiece locked on an adjacent beam, and wherein the workpiece abuts against the lateral reference surface of the reference body.

4. The apparatus according to claim 2 or 3, wherein said device for varying the longitudinal position comprises at least one sliding guide for said reference body, parallel to the longitudinal development direction of the beam; preferably, said guide is provided on a support base of the reference body; preferably, said device for varying the longitudinal position comprises at least one movement actuator, preferably of an automated type, interposed between said base and said reference body, configured to move said body on said at least one guide.

5. The apparatus according to claim 2, 3, or 4, wherein said at least one workpiece-holding device comprises a lifting and lowering device for said reference body, from a first level corresponding to a reference position for the workpiece to be machined to a second level where the reference body is entirely below the support surface of the workpiece on said carriage, and more preferably at least partially below the workpiece locking member on the carriage; said lifting and lowering device comprising at least one displacement actuator, preferably of an automated type.

6. The apparatus according to claim 5, wherein said reference body comprises a front face defining the front reference surface for the workpiece, provided with a concave portion with its concavity open toward said workpiece-holding carriage, adapted to at least partially accommodate the workpiece clamping member when the reference body is moved to the second level.

7. The apparatus according to claim 5 or 6, wherein said reference body comprises two elongated teeth extending in the longitudinal development direction of the beam, the vertex areas of said two teeth defining said front reference surface for the workpiece, and the outer lateral flanks of said teeth defining two respective opposed lateral reference surfaces for the workpiece, said teeth being spaced apart by a greater distance than the transverse width of said workpiece locking member to accommodate at least partially said workpiece clamping member between them.

8. The apparatus according to one or more of the preceding claims, wherein the beam of said at least one workpiece-holding device comprises a head and a tail, and said reference body is positioned approximately at the head of the beam.

9. The apparatus according to one or more of the preceding claims, wherein said workpiece-holding devices are arranged so that their respective longitudinal beams are parallel to each other, and said apparatus comprises a system for adjusting the distance between the beams of said workpiece-holding devices.

10. The apparatus according to claim 9, wherein said distance adjustment system comprises adjustment guides, orthogonal to the longitudinal development of the beams, on which said longitudinal beams are mounted.

11. The apparatus according to claim 9, comprising a slide on which said workpiece-holding devices and said distance adjustment system are arranged, wherein said slide is movable along a translation axis, preferably numerically controlled; preferably, said translation axis is parallel to the longitudinal development of said beams; preferably, said apparatus being movable along said translation axis on at least one base.

12. The apparatus according to one or more of the preceding claims, wherein at least two, more preferably all, of said plurality of workpiece-holding devices comprise said at least one lateral reference surface, said front reference surface, and said device for varying the longitudinal position.

13. A machine tool comprising:
- at least one working head configured to hold at least one tool, preferably with at least three working axes;
- at least one workpiece-holding apparatus according to one or more of the preceding claims.

14. The machine tool according to claim 13, comprising a gantry on which said at least one working head is arranged, said head preferably being movable horizontally along the main development of said gantry and vertically, preferably with an orthogonal relative movement between said at least one workpiece-holding apparatus and said gantry or said working head.
